Europäisches Patentamt

(19) European Patent Office

Office européen des brevets

(11) **EP 0 859 333 A1**

(12) **EUROPEAN PATENT APPLICATION**

(43) Date of publication:
**19.08.1998 Bulletin 1998/34**

(51) Int. Cl.⁶: **G06K 9/00**, G06K 9/68

(21) Application number: **97830053.1**

(22) Date of filing: **12.02.1997**

(84) Designated Contracting States:
**AT BE CH DE DK ES FI FR GB GR IE IT LI LU MC NL PT SE**
Designated Extension States:
**AL LT LV RO SI**

(71) Applicant:
**SGS-THOMSON MICROELECTRONICS s.r.l.**
**20041 Agrate Brianza (Milano) (IT)**

(72) Inventors:
- **Kramer, Alan,**
  **c/o SGS-Thomson Microelectronics**
  **20041 Agrate Brianza (IT)**
- **Canegallo, Roberto**
  **15057 Tortona (IT)**

- **Chinosi, Mauro**
  **20090 Cologno Monziese (IT)**
- **Gozzini, Giovanni**
  **25036 Palazzolo sull'Oglio (IT)**
- **Navoni, Loris**
  **20063 Cernusco sul Naviglio (IT)**
- **Rolandi, Pierluigi**
  **15059 Volpedo (IT)**

(74) Representative:
**Cerbaro, Elena et al**
**STUDIO TORTA S.r.l.,**
**Via Viotti, 9**
**10121 Torino (IT)**

(54) **Method of coding characters for word recognition and word recognition device using that coding**

(57) The method of coding characters for word recognition in a word recognition device comprises the steps of: reading a plurality of known words (19); detecting morphological similarities between the characters of the alphabet forming the known words (20-22); associating with each character a weight (23), by associating morphologically similar characters with similar weights; and storing the weights in a data memory of the word recognition device. To detect the morphological similarity between the characters, a confusion table is determined, by plotting data relating to the probability of confusing a character belonging to the known words with other characters; on the basis of the confusion table, a similarity graph is determined in which the characters of the alphabet which can easily be confused with one another are connected by connection lines; and on the basis of the similarity graph, an adjacency list is determined, including the characters of the alphabet arranged by degree of reciprocal similarity. The weights are then fixed in such a way that similar weights correspond to adjacent characters in the adjacency list.

Fig. 2

READ WORDS — 19

DETERMINE CONFUSION TABLE — 20

DETERMINE SIMILARITY GRAPH — 21

GENERATE ADJACENCY LIST — 22

ASSOCIATE WEIGHT — 23

FIG. 5

EP 0 859 333 A1

## Description

The invention relates to a method of coding characters for word recognition and a word recognition device using that coding.

As is known, in automatic recognition of characters, especially if they are handwritten, there are many errors due to the similarity between some characters which is often accentuated by poor reading conditions (low scanner resolution, poor text quality etc.). In particular, the errors are due to the presence of characteristics which are common to different characters and are wrongly interpreted, shifting the choice of the character to be returned towards a character morphologically similar to the original character.

Any corrections made by successive devices (word recognition devices) do not currently take account of the data relating to the morphological closeness between the characters, preferring approaches associated with the context or the frequency of the words under examination.

The object of the invention is therefore to provide a method of coding for use in a word recognition device by allowing the storage of words taking account of the morphological closeness of the different characters.

The invention provides a method of coding characters for word recognition, a word recognition device using that word coding and a word recognition method, as defined in Claim 1, 5 and, respectively, 6.

For an understanding of the invention a preferred embodiment will now be described, purely by way of non-exhaustive example, with reference to the accompanying drawings in which:

- Fig. 1 shows a general block diagram of a word recognition device produced according to the invention;

- Fig. 2 shows a table relating to the character recognition errors;

- Fig. 3 shows a graph obtained from the table in Fig. 2;

- Fig. 4 shows an adjacency list obtained from the graph of Fig. 3;

- Fig. 5 shows a flow-chart relating to the coding method according to the invention; and

- Fig. 6 shows a flow-chart relating to the word recognition method according to the invention.

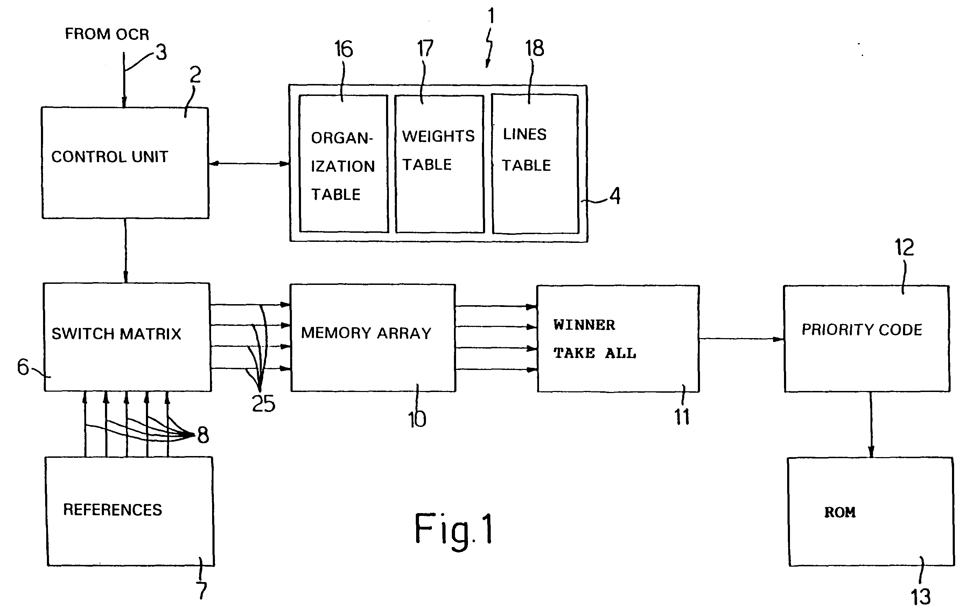

In Fig. 1, the word recognition device 1 is located downstream of an OCR character recognition system which is not shown and is produced according to any known technique, as described, for example, in the article entitled "Off-line Handwritten Word Recognition Using a Hidden Markow Model Type Stochastic Network" by Mou-Yen Chen, Amlan Kundu and Jian Zhou, IEEE Transaction on Pattern Analysis and Machine Intelligence, Vol. 16 No. 5, May 1994.

The device 1 comprises a control unit 2 which coordinates the activities of the device 1, as described below, and has an input 3 at which it receives, from the OCR character recognition system, strings of characters on the basis of which the words are to be recognized; a data memory 4, connected to the control unit 2; a switch matrix 6, connected to the control unit 2; a reference voltages generator 7, connected to the switch matrix 6 by means of input lines 8; a memory array 10, connected to the switch matrix 6 by means of lines 25; a selection block 11, connected to the outputs of the memory array 10; a priority code generation block 12, connected to the output of the selection block; and a memory element 13, connected to the output of the priority code generation block 12.

In detail, the control unit 2 (a software processing unit for example) controls the switch matrix 6 using the data supplied by the data memory 4, including the data relating to the organization of the memory array (table 16); the data relating to the coding used for the individual characters (table 17, which supplies the correspondence between each character of the alphabet and the relative associated weight -voltage level-) and the data relating to the generation of the weights (table 18, which supplies the correspondence between each weight and the line 8 on which it is available). The voltage values corresponding to the weights of the different letters, according to this coding, are generated by the reference voltages generator 7, which may, for example, be produced as described in European patent application 96830498.0 filed on 30.9.96 in the name of this applicant; in its turn the switch matrix 6 may be produced as described in European patent application 96830497.2 filed on 30.9.96 in the name of this applicant. Consequently, on the basis of the commands from the control unit 2, the switch matrix 6 is able to connect the lines 8 associated with the weights corresponding to the word to be recognized to at least some of the input lines 25 of the memory array 10.

The memory array 10 comprises a memory of the associative type, or content-addressable memory; as is known, when this type of memory receives a datum formed by a sequence of elements at its input, it outputs a datum correlated to the address of the line (generally row) in which is stored the datum which is closest to the inputted datum or directly the stored datum closest to the inputted datum (auto-associative memory). For examples the memory array 10 may be produced as described in the article by A Kramer, M Sabatini, R Canegallo, M Chinosi, P L Rolandi and P Zabberoni entitled "Flash-Based Programmable Nonlinear Capacitor for Switched-Capacitor Implementations of Neural Networks" in IEDM Tech. Dig. pp. 17.6.1-17.6.4, December 1994. In particular, this memory array is capable of automatically outputting a voltage value proportional to the Manhattan distance between the inputted datum and the datum stored in each row, as explained in greater detail below.

The distance values present at the outputs 21 of the memory array 10 are supplied to the selection block 11 for the identification of the rows having shorter distance; the selection block 21 is of known type and described for example in "Winner-take-all-networks of O(n) complexity" by Lazzaro, S Ryckenbusch, M A Mahowald and C Mead in Tourestzky D (ed), Advances in Neural Network Information Processing Systems 1. San Mateo CA: Morgan Kauffmann Publisher, pp. 703-711 (1988). The addresses of the rows at minimum distance (or the content of the rows) are then supplied to the priority code generation block 12 which places them in a priority code, on the basis of the row (or vector) at minimum distance, and then to the memory element 13 (a ROM memory for example) for them to be stored.

The coding of the characters is selected by taking account of the probability of error of the character recognition device used, taking account of the morphological closeness of the characters and of the characteristics of the character recognition device on the basis of the following considerations.

Every character recognition device is capable of supplying at least three types of responses: a correct response, when the device succeeds in recognizing the character correctly; an incorrect response, when the device outputs a character which does not correspond to the original one; the rejection of the character, when the device does not have sufficient elements for the decision. By carrying out functional tests in an OCR device it is possible to extract data about the discriminatory capacities of the device and organize them in a table, a so-called confusion table, which represents, for each inputted character, the number of times that character has been recognized in the form of a pre-determined output character.

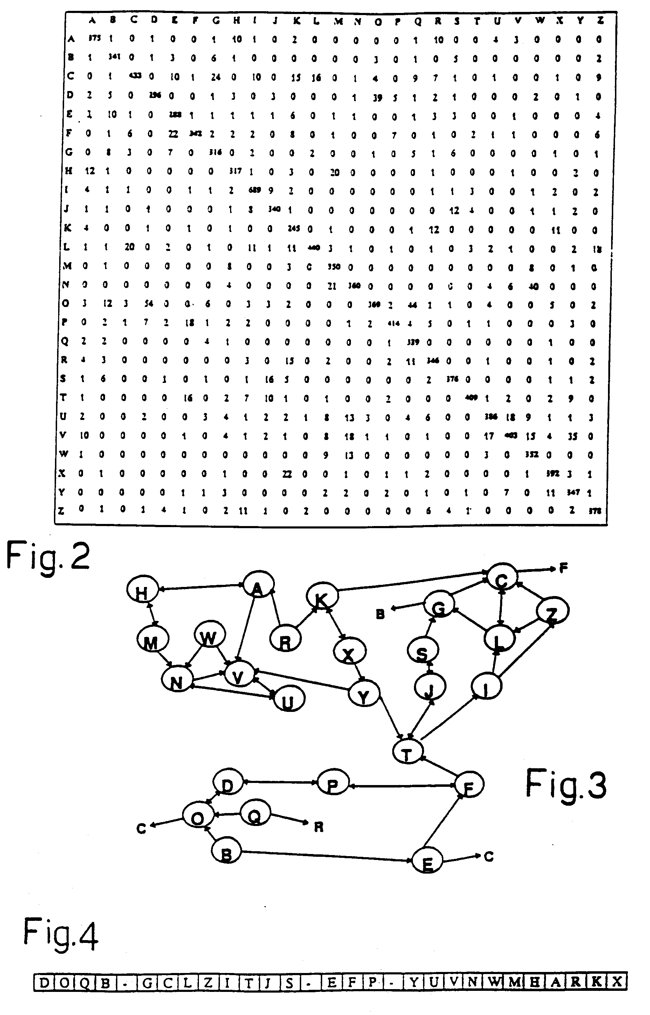

An example of a confusion table obtained for a given character recognition device is shown in Fig. 2. In the confusion table of Fig. 2, "rejections" of characters have not been accepted, but the OCR device has been forced to supply an output character in any case; in this way, if on the one hand there is an increase in noise, on the other hand it is possible to show to a greater extent the morphological closenesses of the characters. In the table, relating to the recognition of upper-case characters, the number in correspondence with the intersection between a given column and a given row indicates the number of times the letter indicated in the column in question has been recognized as the letter indicated in that row. Consequently, the results relating to correct recognitions are plotted on the diagonal and the remaining results are all referred to incorrect recognitions. In practice, therefore, the confusion table represents the degree of similarity of one character to another.

An oriented and weighted graph is extracted from the confusion table, from which graph the noise, produced by occasional incorrect recognitions of characters, is excluded. This exclusion may be carried out by regarding as zero the similarity of characters which may have been confused with one another for a number of times fewer than a pre-determined threshold (less than 5 times for example). An adjacency graph is obtained in this way which, for the table of Fig. 2, assumes the form shown in Fig. 3. In practice, the adjacency graph graphically represents the proximity of groups of characters which have homologous characteristics; and the greater the path from one letter to another, the easier it is to recognize the differences between them.

An adjacency list, shown in Fig. 4, in which the characters which can most easily be confused with each other are placed one next to the other, is obtained from the adjacency graph. This list is obtained, for example, by means of a link identification program which takes account of the weight of each connection and of the double connection existing between different pairs of characters and is used to establish the coding of the characters in the memory array 10, stored as table 17 in the data memory 4. In practice the weight associated with each character is such that the difference between two adjacent characters is represented solely by one weight unit, whilst very different weights correspond to distant elements.

In particular, by using a five-bit coding of the memory array 10, it is possible to program up to 32 different levels. Taking account of the fact that the Latin alphabet comprises 26 letters, the coding of the words may take place by associating a different voltage level of predetermined value with each character of the alphabet forming a word. The six remaining levels may be used for the coding of characters which are special or used as separators. For example, the adjacency list of Fig. 4 may be coded by associating the weight (or coding) 0 for the letter D, 1 for the letter O, 2 for the letter Q and so on, up to 29 for the letter X.

Having generated the table 17 in this way, the memory array 10 is then programmed by loading the individual words of the dictionary on the basis of the weight of the letters which make them up.

Consequently, and as mentioned above, the distance between a word to be recognized and the words stored in the memory array 10 is calculated by comparing each character of the word to be recognized with the respective character of the stored words and accurately calculating the difference between the weight of each character forming the word to be recognized and the weight of the relative character of each stored word and adding these differences. In particular, if we call the weight associated with a single element (character) of a stored word $a_i$ and the weight associated with a corresponding element (character) of the word to be recognized $b_i$, the memory array 10 provides to calculate the distance *dist* as:

$$dist = \sum_{j=1}^{L} |a_i - b_i|$$

where $L$ is the length of the word to be recognized.

In this situation, the distance $dist$ is equal to 0 for one of the stored words, if the word to be recognized is included in the dictionary stored in the memory array 10; it is very small for some of the stored words, in the case of distorted recognition of a character, such that the latter is recognized as one of the characters adjacent to the original one in the adjacency list of Fig. 4; and increases with the deterioration of the discriminatory capacity of the character recognition device, or when the input character is recognized as one of those which are a long way away from the original one in the adjacency list.

Obviously, the coding obtained in this way is strictly linked to the performance of the OCR device which carries out the recognition and for different OCR devices it is necessary to repeat the procedure to obtain the respective adjacency list and hence the respective coding.

Furthermore, the characteristics expressed by the confusion table of Fig. 2 are correlated to the type of characters recognized and may differ in the case of handwritten and printed characters, in the event of upper-case and lower-case characters.

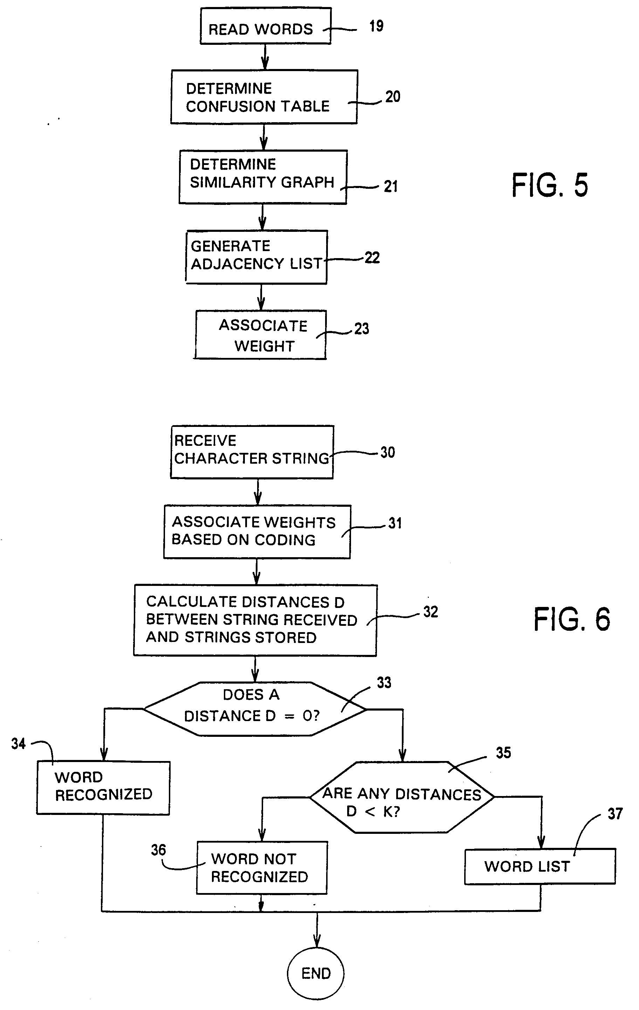

In view of the above and with reference to the flow-chart of Fig. 5, for a given OCR character recognition system, this method of coding comprises the steps:

- reading a plurality of known words with the given OCR system (block 19);
- determining a confusion table, plotting the number of times, in the known read words, a given actual character was recognized correctly or as another character of the alphabet (block 20);
- obtaining a similarity graph, in which the characters that are most capable of being confused with one another (relating to the OCR in question) are reciprocally united by connection lines which show their morphological similarity and the characters which are not so likely to be confused with one another are not connected together (block 21);
- generating an adjacency list, in which the characters of the alphabet are represented along one direction and the characters that are most capable of being confused with one another are disposed reciprocally adjacent and the characters which are less likely to be confused with one another are distant from each other (block 22); and
- associating a weight with each character, in which adjacent characters have similar weights and distant characters have very different weights (block 23).

Furthermore, for a given character recognition device and with reference to the flow-chart of Fig. 6, this method of word recognition comprises the steps of:

- receiving a string of characters relating to a word to be recognized (block 30);
- associating each character of the string received with a weight using the coding described above, so as to associate similar weights with characters having a morphological similarity (block 31);
- calculating the distances D between the string received and the strings stored in the way described above (block 32);
- recognizing a word when the sum calculated is equal to 0 (blocks 33, 34);
- supplying a list of morphologically similar words when some distances D are less than a pre-determined value (blocks 33, 37); and
- supplying an indication of word not recognized (and optionally a list of the words in which d is minimal), when all the distances D are greater than a pre-determined value (block 36).

The advantages that can be obtained with the solution described are as follows. The use of the coding described in an associative-type memory permits an identification with good reliability of the correct word in the case of mistaken recognition of characters, with a simple solution which does not require high integration space. The solution proposed is intrinsically and necessarily adaptable to the OCR system with which it cooperates and is therefore highly flexible. In this way, the overall efficiency of the word recognition device increases notably compared with current devices.

Finally it will be clear that numerous modifications and variants, all of which come within the scope of the inventive concept, may be introduced to the method and device described and illustrated here.

**Claims**

1. Method of coding characters for word recognition in a word recognition device (1), characterized in that it comprises the steps of:

   - reading a plurality of known words;
   - detecting morphological similarities between the characters of the alphabet forming said known words;
   - associating a weight with each character, by associating morphologically similar words with similar weights; and
   - storing said weights in a data memory (4) of the word recognition device (1).

2. Method according to Claim 1, characterized in that said step of detecting similarities comprises the steps of:

- determining a confusion table, by plotting data relating to the probability of confusing a character belonging to said known words with other characters;

- on the basis of said confusion table, determining a similarity graph, by plotting the characters of the alphabet which can easily be confused and are connected by connection lines; and

- on the basis of said similarity graph, determining an adjacency list, including the characters of the alphabet arranged by degree of reciprocal similarity; and in that said step of associating comprises the step of associating the weights in such a way that the adjacent characters in said adjacency list have similar weights.

3. Method according to Claim 2, characterized in that said confusion table comprises a plurality of cells storing the number of times a pre-determined character belonging to said known words has been recognized as each of the characters of the alphabet.

4. Method according to Claim 2 or 3, characterized in that data relating to the probability of confusion between two confusable characters are associated with said connection lines of said similarity graph.

5. Word recognition device, characterized in that it comprises memory means (4) storing a plurality of weights, one for each character of the alphabet, of value correlated to the morphological affinities of said characters; a memory array (10), storing a plurality of sequences of said weights; a control and addressing unit (2) having a first input (3) receiving strings of characters to be recognized, a second input, receiving said weights from said memory means, and an output connected to said memory array.

6. Word recognition method, characterized in that it comprises the steps of:

- storing a plurality of sequences of weights each correlated to a respective word of a dictionary, said weights having a value correlated to the morphological similarity between the characters of the alphabet according to a codified table;

- receiving a string of characters relating to a word to be recognized;

- associating a weight according to said codified table with each character of the string;

- calculating the distances between said string received and said sequences of weights as the sum of the differences between the weights associated with the characters of the string received and the corresponding weights belonging to a respective one of said sequences of weights;

- whenever one of the distances between said string received and one of said sequences of weights is zero, outputting data identifying the word correlated to said one sequence of weights;

- whenever some of the distances between said string received and some of said sequences of weights are below a pre-determined threshold, outputting words correlated to said sequences of weights.

Fig.1

FROM OCR

CONTROL UNIT 2

ORGAN-IZATION TABLE 16

WEIGHTS TABLE 17

LINES TABLE 18

1

4

SWITCH MATRIX 6

MEMORY ARRAY 10

WINNER TAKE ALL 11

PRIORITY CODE 12

ROM 13

REFERENCES 7

8

25

3

EP 0 859 333 A1

6

|   | A | B | C | D | E | F | G | H | I | J | K | L | M | N | O | P | Q | R | S | T | U | V | W | X | Y | Z |
|---|---|---|---|---|---|---|---|---|---|---|---|---|---|---|---|---|---|---|---|---|---|---|---|---|---|---|
| A | 375 | 1 | 0 | 1 | 0 | 0 | 1 | 10 | 1 | 0 | 2 | 0 | 0 | 0 | 0 | 0 | 0 | 1 | 10 | 0 | 0 | 4 | 3 | 0 | 0 | 0 |
| B | 1 | 341 | 0 | 1 | 3 | 0 | 6 | 1 | 0 | 0 | 0 | 0 | 0 | 0 | 0 | 3 | 0 | 1 | 0 | 5 | 0 | 0 | 0 | 0 | 0 | 2 |
| C | 0 | 1 | 433 | 0 | 10 | 1 | 24 | 0 | 10 | 0 | 15 | 16 | 0 | 1 | 4 | 0 | 9 | 7 | 1 | 0 | 1 | 0 | 0 | 1 | 0 | 9 |
| D | 2 | 5 | 0 | 296 | 0 | 0 | 1 | 3 | 0 | 3 | 0 | 0 | 0 | 1 | 39 | 5 | 1 | 2 | 1 | 0 | 0 | 0 | 2 | 0 | 1 | 0 |
| E | 1 | 10 | 1 | 0 | 288 | 1 | 1 | 1 | 1 | 1 | 6 | 0 | 1 | 1 | 0 | 0 | 1 | 3 | 3 | 0 | 0 | 1 | 0 | 0 | 0 | 4 |
| F | 0 | 1 | 6 | 0 | 22 | 342 | 2 | 2 | 2 | 0 | 8 | 0 | 1 | 0 | 0 | 7 | 0 | 1 | 0 | 2 | 1 | 1 | 0 | 0 | 0 | 6 |
| G | 0 | 8 | 3 | 0 | 7 | 0 | 316 | 0 | 2 | 0 | 0 | 2 | 0 | 0 | 1 | 0 | 5 | 1 | 6 | 0 | 0 | 0 | 0 | 1 | 0 | 1 |
| H | 12 | 1 | 0 | 0 | 0 | 0 | 0 | 317 | 1 | 0 | 3 | 0 | 20 | 0 | 0 | 0 | 0 | 1 | 0 | 0 | 0 | 1 | 0 | 0 | 2 | 0 |
| I | 4 | 1 | 1 | 0 | 0 | 1 | 1 | 2 | 689 | 9 | 2 | 0 | 0 | 0 | 0 | 0 | 0 | 1 | 1 | 3 | 0 | 0 | 1 | 2 | 0 | 2 |
| J | 1 | 1 | 0 | 1 | 0 | 0 | 0 | 1 | 3 | 340 | 1 | 0 | 0 | 0 | 0 | 0 | 0 | 0 | 0 | 12 | 4 | 0 | 0 | 1 | 1 | 2 |
| K | 4 | 0 | 0 | 1 | 0 | 1 | 0 | 1 | 0 | 0 | 245 | 0 | 1 | 0 | 0 | 0 | 1 | 12 | 0 | 0 | 0 | 0 | 0 | 11 | 0 | 0 |
| L | 1 | 1 | 20 | 0 | 2 | 0 | 1 | 0 | 11 | 1 | 11 | 440 | 3 | 1 | 0 | 1 | 0 | 1 | 0 | 3 | 2 | 1 | 0 | 0 | 2 | 18 |
| M | 0 | 1 | 0 | 0 | 0 | 0 | 0 | 8 | 0 | 0 | 3 | 0 | 350 | 0 | 0 | 0 | 0 | 0 | 0 | 0 | 0 | 0 | 8 | 0 | 1 | 0 |
| N | 0 | 0 | 0 | 0 | 0 | 0 | 0 | 4 | 0 | 0 | 0 | 0 | 21 | 360 | 0 | 0 | 0 | 0 | 0 | 0 | 4 | 6 | 40 | 0 | 0 | 0 |
| O | 3 | 12 | 3 | 54 | 0 | 0 | 6 | 0 | 3 | 3 | 2 | 0 | 0 | 0 | 369 | 2 | 44 | 1 | 1 | 0 | 4 | 0 | 0 | 5 | 0 | 2 |
| P | 0 | 2 | 1 | 7 | 2 | 18 | 1 | 2 | 2 | 0 | 0 | 0 | 0 | 1 | 2 | 414 | 4 | 5 | 0 | 1 | 1 | 0 | 0 | 0 | 3 | 0 |
| Q | 2 | 2 | 0 | 0 | 0 | 0 | 4 | 1 | 0 | 0 | 0 | 0 | 0 | 0 | 0 | 1 | 339 | 0 | 0 | 0 | 0 | 0 | 1 | 0 | 0 | 0 |
| R | 4 | 3 | 0 | 0 | 0 | 0 | 0 | 0 | 3 | 0 | 15 | 0 | 2 | 0 | 0 | 2 | 11 | 346 | 0 | 0 | 1 | 0 | 0 | 1 | 0 | 2 |
| S | 1 | 6 | 0 | 0 | 1 | 0 | 1 | 0 | 1 | 16 | 5 | 0 | 0 | 0 | 0 | 0 | 0 | 2 | 376 | 0 | 0 | 0 | 0 | 1 | 1 | 2 |
| T | 1 | 0 | 0 | 0 | 0 | 16 | 0 | 2 | 7 | 10 | 1 | 0 | 1 | 0 | 0 | 2 | 0 | 0 | 0 | 409 | 1 | 2 | 0 | 2 | 9 | 0 |
| U | 2 | 0 | 0 | 2 | 0 | 0 | 3 | 4 | 1 | 2 | 2 | 1 | 8 | 13 | 3 | 0 | 4 | 6 | 0 | 0 | 386 | 18 | 9 | 1 | 1 | 3 |
| V | 10 | 0 | 0 | 0 | 0 | 0 | 1 | 0 | 4 | 1 | 2 | 1 | 0 | 8 | 18 | 1 | 1 | 0 | 1 | 0 | 0 | 17 | 403 | 15 | 4 | 35 |
| W | 1 | 0 | 0 | 0 | 0 | 0 | 0 | 0 | 0 | 0 | 0 | 0 | 9 | 13 | 0 | 0 | 0 | 0 | 0 | 0 | 3 | 0 | 352 | 0 | 0 | 0 |
| X | 0 | 1 | 0 | 0 | 0 | 0 | 0 | 0 | 1 | 0 | 0 | 22 | 0 | 0 | 1 | 0 | 1 | 1 | 2 | 0 | 0 | 0 | 0 | 1 | 392 | 3 |
| Y | 0 | 0 | 0 | 0 | 0 | 1 | 1 | 3 | 0 | 0 | 0 | 0 | 2 | 2 | 0 | 2 | 0 | 1 | 0 | 1 | 0 | 7 | 0 | 11 | 347 | 1 |
| Z | 0 | 1 | 0 | 1 | 4 | 1 | 0 | 2 | 11 | 1 | 0 | 2 | 0 | 0 | 0 | 0 | 0 | 0 | 6 | 4 | 1 | 0 | 0 | 0 | 2 | 378 |

Fig.2

Fig.3

Fig.4

| D | O | Q | B | - | G | C | L | Z | I | T | J | S | - | E | F | P | - | Y | U | V | N | W | M | H | A | R | K | X |

READ WORDS — 19

DETERMINE CONFUSION TABLE — 20

DETERMINE SIMILARITY GRAPH — 21

GENERATE ADJACENCY LIST — 22

ASSOCIATE WEIGHT — 23

FIG. 5

RECEIVE CHARACTER STRING — 30

ASSOCIATE WEIGHTS BASED ON CODING — 31

CALCULATE DISTANCES D BETWEEN STRING RECEIVED AND STRINGS STORED — 32

DOES A DISTANCE D = 0? — 33

34 — WORD RECOGNIZED

ARE ANY DISTANCES D < K? — 35

36 — WORD NOT RECOGNIZED

WORD LIST — 37

FIG. 6

END

European Patent
Office

**EUROPEAN SEARCH REPORT**

Application Number

EP 97 83 0053

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 3 969 698 A (BOLLINGER ELLEN WILLIS ET AL) 13 July 1976<br>* column 3, line 1 - column 8, line 30; claims 1,2; figures 2,3; table 1 * | 1-6 | G06K9/00<br>G06K9/68 |
| A | PROCEEDINGS OF THE 13TH INTERNATIONAL CONFERENCE ON PATTERN RECOGNITION, PROCEEDINGS OF 13TH INTERNATIONAL CONFERENCE ON PATTERN RECOGNITION, VIENNA, AUSTRIA, 25-29 AUG. 1996, ISBN 0-8186-7282-X, 1996, LOS ALAMITOS, CA, USA, IEEE COMPUT. SOC. PRESS, USA, pages 560-564 vol.4, XP002035514 MURAKI K: "Error correction scheme augmented with statistical and lexical learning capability, for Japanese OCR"<br>* the whole document * | 1-6 | |
| A | IBM TECHNICAL DISCLOSURE BULLETIN, vol. 33, no. 10B, 1 March 1991, pages 221-224, XP000110175 "FAST METHOD OF CORRECTING SUBSTITUTION ERRORS IN OPTICAL CHARACTER RECOGNITION"<br>* the whole document * | 1-6 | TECHNICAL FIELDS SEARCHED (Int.Cl.6)<br><br>G06K<br>G06F |
| A | INTERNATIONAL JOINT CONFERENCE ON NEURAL NETWORKS (IJCNN), SAN DIEGO, JUNE 17 - 21, 1990,<br>vol. VOL. 1, no. -, 17 June 1990, INSTITUTE OF ELECTRICAL AND ELECTRONICS ENGINEERS, pages 27-32, XP000144189 JAGOTA A: "APPLYING A HOPFIELD-STYLE NETWORK TO DEGRADED TEXT RECOGNITION"<br>* page 28, line 43 - page 30, line 17 * | 1-6 | |

The present search report has been drawn up for all claims

| Place of search | Date of completion of the search | Examiner |
|---|---|---|
| THE HAGUE | 17 July 1997 | Fournier, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document